# EUROPÄISCHE PATENTSCHRIFT

(11) **EP 1 376 005 B1**
(45) Veröffentlichungstag und Bekanntmachung des Hinweises auf die Patenterteilung: **24.01.2007**
(21) Anmeldenummer: 03101745.2
(22) Anmeldetag: 13.06.2003
(51) Int. Cl.: F21S 8/10, F21V 19/00, B60Q 1/30

(54) **Fahrzeugleuchte**
Vehicle lamp
Lampe pour véhicule

(30) Priorität: 26.06.2002 DE 10228445
(43) Veröffentlichungstag der Anmeldung: 02.01.2004
(73) Patentinhaber: Hella KGaA Hueck & Co., 59552 Lippstadt (DE)
(72) Erfinder: Hartmann, Ulrich, 59519 Möhnesee (DE); Berghoff, Wolfgang, 59609 Anröchte (DE); Dietmar, Philipp, 59597 Erwitte (DE)
(74) Vertreter: Ostermann, Thomas

(56) Entgegenhaltungen:
- EP-A- 1 107 389
- EP-A- 1 111 297
- US-A- 4 972 303

## Beschreibung

Die Erfindung betrifft eine Fahrzeugleuchte mit einem ein- oder mehrteiligen Gehäuse, einer das Gehäuse abschließenden Lichtscheibe, zumindest einer auf einem in dem Gehäuse angeordneten Lichtquellenträger kontaktierten Lichtquelle und Mitteln zur elektrischen Kontaktierung der elektrisch leitenden Bahnen des Lichtquellenträgers mit der Spannungsversorgung des Fahrzeugs wobei die Mittel am Gehäuse angeordnete Kontaktelemente sind, die an ihrem ins Gehäuseinnere weisenden Ende den Lichtquellenträger zumindest bereichsweise zur elektrischen Kontaktierung umgreifen und die an ihrem aus dem Gehäuse hinausragenden Ende mit der Spannungsversorgung des Fahrzeugs verbindbar sind.

Aus der DE 40 03 569 C2 der als nächsfliegender Stand der Technik angesehen wird ist eine derartige Fahrzeugleuchte bekannt. Bei der bekannten Fahrzeugleuchte handelt es sich um eine Zusatzbremsleuchte, die eine längliche Grundform aufweist und in einen Ausschnitt einer Fahrzeugkarosserie einsetzbar ist. Um den in dem Gehäuse angeordneten Lichtquellenträger mit der Spannungsversorgung des Fahrzeugs zu verbinden, ist eine aus mehreren Adern bestehende elektrische Leitung durch eine Öffnung des Gehäuses hindurchgeführt. Die Aderenden sind fest mit den leitenden Bahnen des Lichtquellenträgers verbunden. Diese Verbindung ist beispielhaft mittels Löten hergestellt, wobei andere Verbindungsverfahren wie z.B. Laserschweißen ebenfalls aus dem allgemeinen Stand der Technik bekannt sind. Die GehäuseÖffnung ist mit einem gummielastischen Dichtungselement abgedichtet, damit keine Feuchtigkeit in das Innere der Fahrzeugleuchte eindringen kann. Nachteilig an einer derart bekannt Fahrzeugleuchte ist es, dass zur elektrischen Kontaktierung des Lichtquellenträgers eine in der Länge für jeden Fahrzeugtyp genau festgelegte elektrische Leitung mittels eines aufwendigen Fertigungsverfahren mit dem Lichtquellenträger verbunden und diese Baueinheit aus Lichtquellenträger und Leitungsgruppe dann im Gehäuse angeordnet werden muss. Weiterhin ist es nachteilig, dass zur elektrischen Kontaktierung des Lichtquellenträgers eine Vielzahl von Bauteilen und Montageschritten notwendig sind.

Aus der EP 1 107 389 A1 ist ebenfalls eine derartige Fahrzeugleuchte bekannt. Die Fahrzeugleuchte umfasst ein Leuchtengehäuse, in welchem eine Öffnung vorgesehen ist. In diese Öffnung ist eine LED-Einheit, die im wesentlichen T-förmigen Querschnitt aufweist, formschlüssig eingefügt. Dabei liegen die Unterseiten des Querschenkels an einer Außenfläche des Leuchtengehäuses an. An der der Innenseite des Leuchtengehäuses zugewandten und in den Innenraum hineinragenden Seite der LED-Einheit sind eine Vielzahl von LEDs ange-ordnet. Kontakte (z.B. Federkontakte) der LEDs sind aus der LED-Einheit herausgeführt und so angeordnet, dass sie mit an dem Leuchtengehäuse vorgesehenen Leiterbahnen bei eingesetzter LED-Einheit zur Anlage kommen. Nach dem Einsetzen der LED-Einheit liegen die Kontakte der LED-Einheit an in dem Leuchtengehäuse angeordneten Leiterbahnen an. Die Leiterbahnen verlaufen überwiegend im Leuchtengehäuse und enden mit einem Ende, und zwar in Form von Pins, in einem Zentralstecker. Über diesen Zentralstecker erfolgt die Stromversorgung der LED-Einheit. Nachteilig an der Fahrzeugleuchte ist es, dass sie einen komplizierten Aufbau aufweist und die LED-Einheit sehr sauber in das Leuchtengehäuse eingesetzt werden muss, um eine sichere und dauerhafte Kontaktierung zu gewährleisten. Dies macht die Montage aufwendig und somit kostenintensiv.

Aus der EP 1 111 297 A1 ist eine Notfallbeleuchtung bekannt, bei der der Lampenträger mittels Schneid-Klemm-Verbindung mit einer Spannungsversorgung verbindbar ist.

Aufgabe der Erfindung ist es, eine Fahrzeugleuchte gemäß dem Oberbegriff des Anspruchs 1 zu schaffen, die einfach aufgebaut ist, über möglichst wenig Bauteile verfügt, leicht zu montieren und somit kostengünstig ist.

Diese Aufgabe wird erfindungsgemäß dadurch gelöst, dass die Kontaktelemente durch in das Gehäuse eingebrachte Öffnungen in das Gehäuse einlegbar sind, wodurch die Montage der Kontaktelemente vorteilhaft vereinfacht wird. Zweckmäßigerweise sind die Öffnungen durch in das Gehäuse eingebrachte Schlitze gebildet, was den Vorteil bietet, dass die Kontaktelemente bei ihrer Montage geführt und somit selbsttätig in der richtigen Position auf den Licht-quellenträger aufgeschoben werden. Vorteilhaft weisen die Kontaktelemente Rastnasen auf, die sich bei der Montage in die Seitenflächen der Schlitze drücken und so die Kontaktelemente selbsthemmend in den Schlitzen halten.

Bei einer vorteilhaften Ausgestaltung der Erfindung ist das zumindest bereichsweise Umgreifen des Lichtquellenträgers zur elektrischen Kontaktierung mittels einer Schneid-Klemm-Verbindung hergestellt, die einfach herzustellen ist und neben einer dauerhaften und sicheren elektrischen Kontaktierung auch ein hohes Maß an mechanischer Stabilität gewährleistet.

Die in das Gehäuseinnere weisenden und den Lichtquellenträger zumindest bereichsweise umgreifenden Enden der Kontaktelemente liegen bei einer vorteilhaften Ausführungsform der Fahrzeugleuchte zumindest an einer Stelle an den elektrisch leitenden Bahnen des Lichtquellenträgers an, wodurch die Montage der Kontaktelemente auf den Lichtquellenträger vereinfacht wird, da die Arme der Kontaktelemente nicht großflächig auf den Lichtquellenträger geschoben werden müssen und somit nicht einer großen Flächenpressung unterliegen.

Bei einer vorteilhaften Ausführungsform der Erfindung sind die aus dem Gehäuse hinausragenden Enden der Kontaktelemente fest mit den Adern einer elektrischen Leitung verbunden, wodurch aufgabengemäß die Anzahl der Bauteile verringert wird.

Die elektrische Verbindung zwischen der Fahrzeugleuchte und der Spannungsversorgung des Fahrzeugs ist bei einer anderen vorteilhaften Ausführungsform dadurch vorteilhaft vereinfacht, dass die aus dem Gehäuse hinausragenden Enden der Kontaktelemente derart ausgebildet sind, dass sie mit einem fahrzeugseitigem Steckerelement verbindbar sind.

Eine vorteilhafte Ausführungsform der Erfindung sieht vor, dass die aus dem Gehäuse hinausragenden Enden der Kontaktelemente in ein Steckergehäuse hineinragen, wodurch eine einfache und sichere elektrische Kontaktierung mit einer fahrzeugseitigen elektrischen Leitung oder einem fahrzeugseitigem Stecker hergestellt werden kann. Zweckmäßigerweise ist das Steckergehäuse einstückig mit dem Gehäuse der Fahrzeugleuchte ausgebildet, damit die Anzahl der Bauteile aufgabengemäß weiter reduzierbar ist.

Bei einer vorteilhaften Ausführungsform der Erfindung ist der zumindest eine Lichtquellenträger eine Platine, welche einfach und kostengünstig herstellbar ist und so den Anforderungen von unterschiedlichen Fahrzeugleuchten angepasst werden kann.

Der benötigte Bauraum für die Fahrzeugleuchte wird vorteilhaft dadurch minimiert, dass die zumindest eine auf dem Lichtquellenträger kontaktierte Lichtquelle eine LED ist.

Der beschriebene Aufbau einer erfindungsgemäßen Fahrzeugleuchte ist besonders Vorteilhaft, wenn die Fahrzeugleuchte eine in einen Ausschnitt der Fahrzeugkarosserie einsetzbare Zusatzbremsleuchte ist.

Anhand der Zeichnungen wird eine vorteilhafte Ausführungsform der Erfindung erläutert. Es zeigen:
Figur 1: die geschnittene Seitenansicht der Fahrzeugleuchte,
Figur 2: die perspektivische Vorderansicht der Fahrzeugleuchte und
Figur 3: die perspektivische Ansicht von Unten der Fahrzeugleuchte.

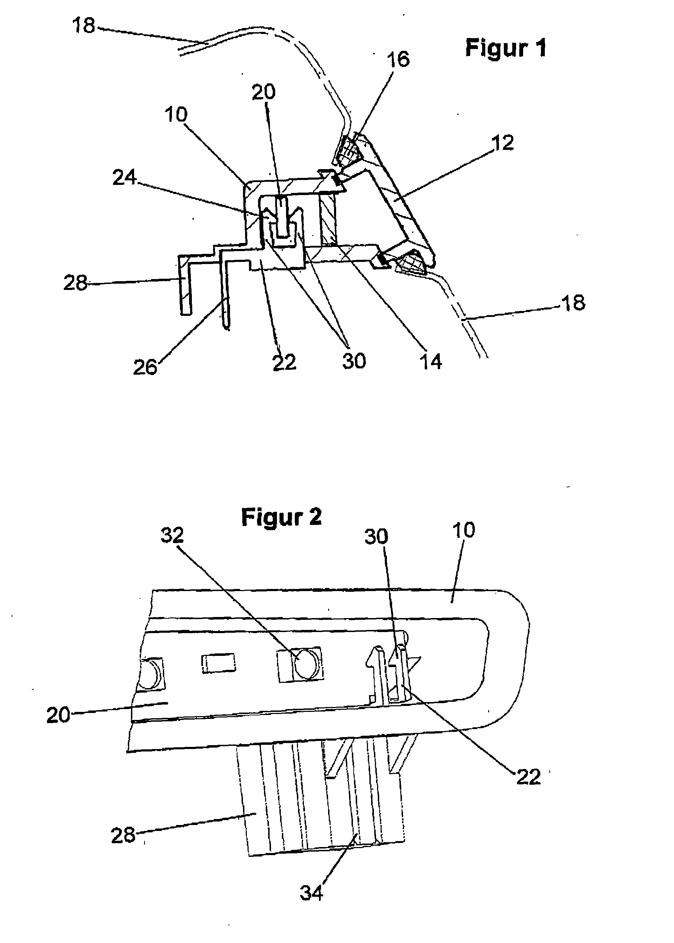

In Figur 1 ist die geschnittene Seitenansicht einer in einen Ausschnitt der Fahrzeugkarosserie (18) eingesetzten Zusatzbremsleuchte dargestellt. Auf das Gehäuse (10) der Fahrzeugleuchte ist eine Lichtscheibe (12) geschweißt, die mit ihrem Umfang den Ausschnitt der Fahrzeugkarosserie (18) überragt. Zwischen dem äußeren Rand der Lichtscheibe (12) und der Fahrzeugkarosserie (18) ist eine Dichtung (16) eingesetzt, die das Innere der Fahrzeugkarosserie (18) gegenüber äußeren Einflüssen wie z.B. Feuchtigkeit schützt. In dem durch das Gehäuse (10) und die Lichtscheibe (12) gebildeten Gehäuseinneren ist ein Lichtquellenträger (20) und eine diesem in Abstrahlrichtung vorgelagerte Zusatzlichtscheibe (14) angeordnet. In das Gehäuse (10) ist zusätzlich ein Kontaktelement (22) eingelegt, dass mit den Armen (30) seines ins Gehäuseinnere weisenden Endes (24) den Lichtquellenträger (20) zumindest bereichsweise zur elektrischen Kontaktierung umgreift. Das Kontaktelement (22) ragt mit seinem aus dem Gehäuse (10) hinausragenden Ende (26) in ein einstückig mit dem Gehäuse (10) ausgebildeten Steckergehäuse (28) hinein. In diesem Steckergehäuse (28) ist das Ende (26) des Kontaktelementes (22) dann mit einem fahrzeugseitigem Steckerelement verbindbar.
In Figur 2 ist ein Ausschnitt der Fahrzeugleuchte in einer perspektivischen Ansicht von der Fahrzeugaußenseite her jedoch ohne die Lichtscheibe (12) und die Zusatzlichtscheibe (14) dargestellt. In dem Gehäuse (10) der Fahrzeugleuchte ist der Lichtquellenträger (20) angeordnet, auf dem mehrere Lichtquellen (32) in Form von LEDs kontaktiert sind. Durch in das Gehäuse (10) und das Steckergehäuse (28) eingebrachte Schlitze (34) sind zwei Kontaktelemente (22) in das Gehäuse (10) eingelegt. Die Arme (30) der Kontaktelemente (22) umgreifen im Gehäuseinneren bereichsweise den Lichtquellenträger (20) und stellen so einen elektrischen Kontakt zwischen den leitenden Bahnen des Lichtquellenträgers (20) und den Kontaktelementen (22) her.

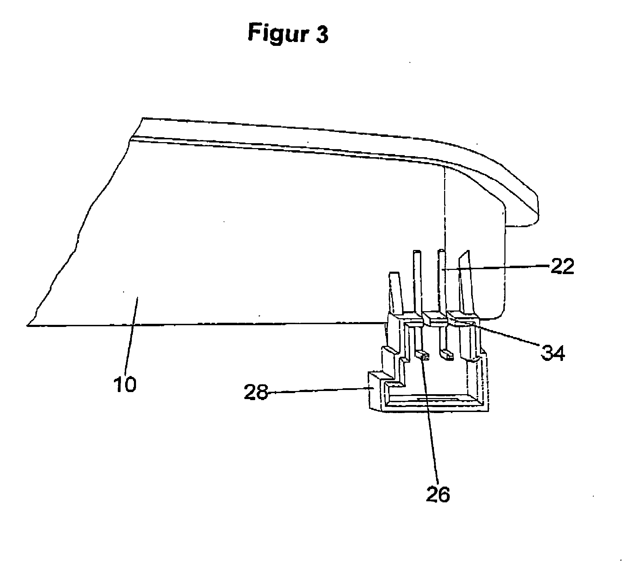

Figur 3 zeigt den in Figur 2 dargestellten Ausschnitt der Fahrzeugleuchte in einer perspektivischen Ansicht von unten. Die zwei Kontaktelemente (22) sind durch die in das Gehäuse (10) und das Steckergehäuse (28) eingebrachten Schlitze (34) in die Fahrzeugleuchte eingelegt. Die Enden (26) der Kontaktelemente (22) ragen in das einstückig mit dem Gehäuse (10) ausgebildeten Steckergehäuse (28) hinein und können so mit einem fahrzeugseitigem Steckerelement elektrisch kontaktiert werden.

### Bezugszeichenliste:

- 10: Gehäuse
- 12: Lichtscheibe
- 14: Zusatzlichtscheibe
- 16: Dichtung
- 18: Fahrzeugkarosserie
- 20: Lichtquellenträger
- 22: Kontaktelement
- 24: Ende
- 26: Ende
- 28: Steckergehäuse
- 30: Arm
- 32: Lichtquelle
- 34: Schlitz

## Patentansprüche

1. Fahrzeugleuchte mit einem ein- oder mehrteiligen Gehäuse (10), einer das Gehäuse (10) abschließenden Lichtscheibe (12), zumindest einer auf einem in dem Gehäuse (10) angeordneten Lichtquellenträger (20) kontaktierten Lichtquelle (32) und Mitteln zur elektrischen Kontaktierung der elektrisch leitenden Bahnen des Lichtquellenträgers (20) mit der Spannungsversorgung des Fahrzeugs, wobei die Mittel am Gehäuse (10) angeordnete Kontaktelemente (22) sind, die an ihrem ins Gehäuseinnere weisenden Ende (24) den Lichtquellenträger (20) zumindest bereichsweise zur elektrischen Kontaktierung umgreifen und die an ihrem aus dem Gehäuse (10) hinausragenden Ende (26) mit der Spannungsversorgung des Fahrzeugs verbindbar sind, **dadurch gekennzeichnet, dass** die Kontaktelemente (22) durch in das Gehäuse (10) eingebrachte Öffnungen in das Gehäuse (10) einlegbar sind.

2. Fahrzeugleuchte nach Anspruch 1, **dadurch gekennzeichnet, dass** die Öffnungen durch in das Gehäuse (10) eingebrachte Schlitze (34) gebildet sind.

3. Fahrzeugleuchte nach einem der vorstehenden Ansprüche, **dadurch gekennzeichnet, dass** das zumindest bereichsweise Umgreifen des Lichtquellenträgers (20) zur elektrischen Kontaktierung mittels einer Schneid-Klemm-Verbindung ausgeführt ist.

4. Fahrzeugleuchte nach einem der vorstehenden Ansprüche, **dadurch gekennzeichnet, dass** die in das Gehäuseinnere weisenden und den Lichtquel-lenträger (20) zumindest bereichsweise umgreifenden Enden (24) der Kontaktelemente (22) zumindest an einer Stelle an den elektrisch leitenden Bahnen des Lichtquellenträgers (20) anliegen.

5. Fahrzeugleuchte nach einem der vorstehenden Ansprüche, **dadurch gekennzeichnet, dass** Adern einer elektrischen Leitung fest mit den aus dem Gehäuse (10) hinausragenden Enden (26) der Kontaktelemente (22) verbunden sind.

6. Fahrzeugleuchte nach einem der Ansprüche 1 bis 4, **dadurch gekennzeichnet, dass** die aus dem Gehäuse (10) hinausragenden Enden (26) der Kontaktelemente (22) derart ausgebildet sind, dass sie mit einem fahrzeugseitigem Steckerelement verbindbar sind.

7. Fahrzeugleuchte nach einem der vorstehenden Ansprüche, **dadurch gekennzeichnet, dass** die aus dem Gehäuse (10) hinausragenden Enden (26) der Kontaktelemente (22) in ein Steckergehäuse (28) hineinragen.

8. Fahrzeugleuchte nach Anspruch 7, **dadurch gekennzeichnet, dass** das Steckergehäuse (28) einstückig mit dem Gehäuse (10) der Fahrzeugleuchte ausgebildet ist.

9. Fahrzeugleuchte nach einem der vorstehenden Ansprüche, **dadurch gekennzeichnet, dass** der zumindest eine Lichtquellenträger (20) eine Platine ist.

10. Fahrzeugleuchte nach einem der vorstehenden Ansprüche, **dadurch gekennzeichnet, dass** die zumindest eine auf dem Lichtquellenträger (20) kontaktierte Lichtquelle (32) eine LED ist.

11. Fahrzeugleuchte nach einem der vorstehenden Ansprüchen, **dadurch gekennzeichnet, dass** die Fahrzeugleuchte eine in einen Ausschnitt der Fahrzeugkarosserie (18) einsetzbare Zusatzbremsleuchte ist.

## Claims

1. A vehicle lamp comprising a single- or multi-part housing (10), a lamp glass (12) sealing off the housing (10), at least one light source (32) connected to a light-source holder (20) disposed in the housing (10), and means for electrically connecting the electrically conductive tracks of the light-source holder (20) to the vehicle's power supply, said means being contact elements (22) which are disposed on the housing (10) and which, at their ends (24) extending into the interior of the housing, surround the light-source holder (20) at least in some areas for the electrical connection and at their ends (26) projecting from the housing (10) can be connected to the vehicle's power supply, **characterized in that** said contact elements (22) can be inserted into the housing (10) through openings provided in said housing.

2. A vehicle lamp according to Claim 1, **characterized in that** the openings consist of slots (34) made in the housing (10).

3. A vehicle lamp according to one of the preceding claims, **characterized in that** the at least partial surrounding of the light-source holder (20) for the electrical contact is achieved by means of an insulation displacement connection.

4. A vehicle lamp according to one of the preceding claims, **characterized in that** the ends (24) of the contact elements (22) extending into the interior of the housing and at least partly surrounding the light-source holder (20) rest at least at one point against the electrically conductive tracks of the light-source holder (20).

5. A vehicle lamp according to one of the preceding claims, **characterized in that** the wires of an electric lead are firmly attached to the ends (26) of the contact elements (22) projecting from the housing (10).

6. A vehicle lamp according to one of Claims 1 to 4, **characterized in that** the ends (26) of the contact elements (22) projecting from the housing (10) are formed in such a way that they can be connected to a plug element at the vehicle end.

7. A vehicle lamp according to one of the preceding claims, **characterized in that** the ends (26) of the contact elements (22) projecting from the housing (10) extend into a plug housing (28).

8. A vehicle lamp according to Claim 7, **characterized in that** the plug housing (28) is made in one piece with the housing (10) of the vehicle lamp.

9. A vehicle lamp according to one of the preceding claims, **characterized in that** the at least one light-source holder (20) is a printed circuit board.

10. A vehicle lamp according to one of the preceding claims, **characterized in that** the at least one light source (32) connected to the light-source holder (20) is an LED.

11. A vehicle lamp according to one of the preceding claims, **characterized in that** the vehicle lamp is an additional brake light which can be inserted into a recess provided in the body of the vehicle (18).

## Revendications

1. Feu de véhicule comportant un boîtier (10) en une ou plusieurs parties, une plaque lumineuse (12) fermant le boîtier (10), au moins une source lumineuse (32), mise en contact sur un support de source lumineuse (20) agencé dans le boîtier (10), et des moyens pour l'établissement du contact électrique entre des pistes électroconductrices du support de source lumineuse (20) et l'alimentation en courant du véhicule, lesdits moyens étant des éléments de contact (22) disposés sur le boîtier (10), lesquels, au niveau de leur extrémité (24) orientée vers l'intérieur du boîtier, enserrent au moins par zones le support de source lumineuse (20) en vue de l'établissement du contact électrique et lesquels, au niveau de leur extrémité (26) s'avançant hors du boîtier (10), sont destinés à être reliés à l'alimentation en courant du véhicule, **caractérisé en ce que** les éléments de contact (22) peuvent être insérés dans le boîtier (10) en passant par des orifices ménagés dans le boîtier (10).

2. Feu de véhicule selon la revendication 1, **caractérisé en ce que** les orifices sont formés par des fentes (34) ménagées dans le boîtier (10).

3. Feu de véhicule selon l'une quelconque des revendications précédentes, **caractérisé en ce que** le support de source lumineuse (20), en vue de l'établissement du contact électrique, est entouré au moins par zones au moyen d'un assemblage par découpe et serrage.

4. Feu de véhicule selon l'une quelconque des revendications précédentes, **caractérisé en ce que** les extrémités (24) des éléments de contact (22), orientées vers l'intérieur du boîtier et entourant au moins par zones le support de source lumineuse (20), sont en appui au moins en un emplacement contre les pistes électroconductrices du support de source lumineuse (20).

5. Feu de véhicule selon l'une quelconque des revendications précédentes, **caractérisé en ce que** des conducteurs d'un câble électrique sont reliés fermement avec les extrémités (26) des éléments de contact (22), s'avançant hors du boîtier (10).

6. Feu de véhicule selon l'une quelconque des revendications 1 à 4, **caractérisé en ce que** les extrémités (26) des éléments de contact (22), s'avançant hors du boîtier (10), sont réalisées de telle sorte qu'elles peuvent être reliées à un élément de connexion du côté véhicule.

7. Feu de véhicule selon l'une quelconque des revendications précédentes, **caractérisé en ce que** les extrémités (26) des éléments de contact (22), s'avançant hors du boîtier (10), s'engagent à l'intérieur d'un boîtier de connexion (28).

8. Feu de véhicule selon la revendication 7, **caractérisé en ce que** le boîtier de connexion (28) est réalisé d'un seul tenant avec le boîtier (10) du feu de véhicule.

9. Feu de véhicule selon l'une quelconque des revendications précédentes, **caractérisé en ce que** ledit au moins un support de source lumineuse (20) est une platine.

10. Feu de véhicule selon l'une quelconque des revendications précédentes, **caractérisé en ce que** ladite au moins une source lumineuse (32) mise en contact sur le support de source lumineuse (20) est une diode électroluminescente.

11. Feu de véhicule selon l'une quelconque des revendications précédentes, **caractérisé en ce que** le feu de véhicule est un feu de frein supplémentaire, destiné à être inséré dans une découpe de la carrosserie (18) du véhicule.
